# EUROPEAN PATENT APPLICATION

(11) **EP 1 650 775 A2**
(43) Date of publication of application: **26.04.2006**
(21) Application number: 05109407.6
(22) Date of filing: 11.10.2005
(51) Int. Cl.: H01F 27/02, H01F 27/04

(54) **Water-tight multiple junction box for an electronic transformer**

(30) Priority: 20.10.2004 IT MI20040473 U
(71) Applicant: iGUZZINI ILLUMINAZIONE S.p.A., 62019 Recanati-Macerata (IT)
(72) Inventor: Guzzini, Giannunzio, 6201 Recanati (Macerata) (IT)
(74) Representative: De Gregori, Antonella

(57) **Abstract**

A water-tight multiple junction box for an electronic transformer comprising a box-shaped body (12) for housing an electronic transformer (25), carrying a plurality of holes (16a, 16b) equipped with cable glands (17a, 17b) for the passage of cables to the outside of the box (10) towards the mains and the lighting apparatuses, as well as a water-tight upper cover (22), also comprises a lower chamber (14), suitable for housing the transformer and an upper chamber (13), suitable for housing a wiring terminal board (24), in which the chambers (13, 14) are separated by a water-tight inner cover (15), which comprises at least one hole (27) equipped with an inner cable gland (28) for the electrical connection to the transformer (25).

## Description

The present invention refers to a water-tight multiple junction box for an electronic transformer.

For multiple installations of built-in outdoor lighting apparatuses, possibly also to be fitted at the ground, of the type not directly provided with an electronic transformer, it is necessary to take care of separately installing a junction box containing the transformer.

It is known to protect the transformer from water or humidity by inserting it in a protective box and embedding its ballast in a resin cast or casing. The connection to the mains and to the lighting apparatuses is carried out by joining the cables that, connected to the ballast, are made to project out from the resin cast.

A drawback of such known solutions consists of the fact that such cables must be connected with terminals in turn insulated from the outside by means of resin means, which the installer must make on location at the time of assembly.

Moreover, should it become necessary to take care of another installation it is necessary to cut the cables coming out from the ballast.

Another drawback consists of the fact that, in the case of malfunction the transformer, it has to be integrally replaced since it is not possible to access the components of the electronic board of the transformer either to carry out repairs or to analyse the failure. Indeed, the analysis of defectiveness can in these transformers be carried out exclusively by irreparably breaking it.

Further drawbacks are linked to the heating of the transformer during operation that acts negatively on the insulating resin. Moreover, during the subsequent cooling of the transformer a depression is created inside the resin casing, sufficient to cause water to enter through the electric cables.

The purpose of the present invention is that of making a water-tight multiple junction box for an electronic transformer that overcomes the quoted drawbacks.

Another purpose of the present invention is that of making a water-tight multiple junction box for an electronic transformer that allows the inspection and/or maintenance of the transformer even after installation.

Another purpose is that of making a box that is easy to install and has high operating safety.

Another purpose of the present invention is that of making a water-tight multiple junction box for an electronic transformer that is particularly simple and functional, with low costs.

These purposes according to the present invention are accomplished by making a water-tight multiple junction box for an electronic transformer as outlined in claim 1.

Further characteristics of a water-tight multiple junction box for an electronic transformer are the subject of the dependent claims.

The characteristics and advantages of a water-tight multiple junction box for an electronic transformer according to the present invention shall become clearer from the following description, given as an example and not for limiting purposes, referring to the attached schematic drawings, in which:
figure 1 is a perspective view of a box-shaped body of a water-tight multiple junction box for an electronic transformer, object of the present invention;
figure 2 is a perspective view of an inner cover suitable for being housed in the box-shaped body of figure 1;
figures 3 and 4 are respectively a plan view from below of an upper cover of the box-shaped body of figure 1 and a section made according to the line IV-IV of figure 3;
figure 5 is a plan view of a water-tight multiple junction box for an electronic transformer, object of the present invention, without the upper cover, in which the electric components contained are shown schematically and the outer cable glands are shown exploded;
figure 6 is a section according to the line VI-VI of figure 5 of a water-tight multiple junction box for an electronic transformer, object of the present invention, closed, in which the terminal board and the transformer are shown schematically;
figure 7 shows an enlarged and sectioned detail of a flanged cable gland of the inner cover.

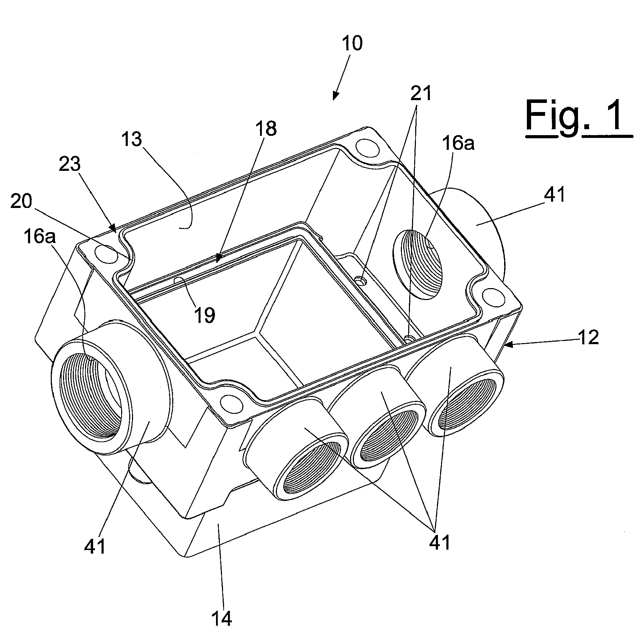

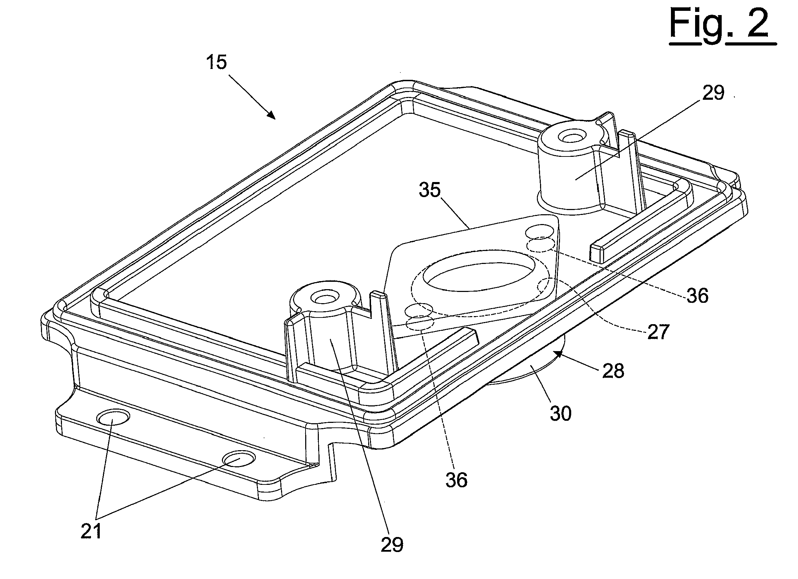

With reference to the figures, a water-tight multiple junction box for an electronic transformer is shown, wholly indicated with 10 and comprising a box-shaped body 12 made up of two chambers, a lower chamber 13 and an upper chamber 14, as shown in figure 1, separated by an inner cover 15, shown in figure 2.

On two opposite sides of the box 10, and in particular at the upper chamber 13, holes 16a are foreseen, respectively for the entry of the power supply cable and for the through wiring, not shown, equipped with cable glands 17a for a water-tight seal.

On a third side it is equipped with a plurality of holes 16b, also equipped with cable glands 17b and arranged at the upper chamber 13, for the junction wiring for supplying power to the low-voltage lighting apparatuses connected to the box, not shown, in the example in a number equal to three.

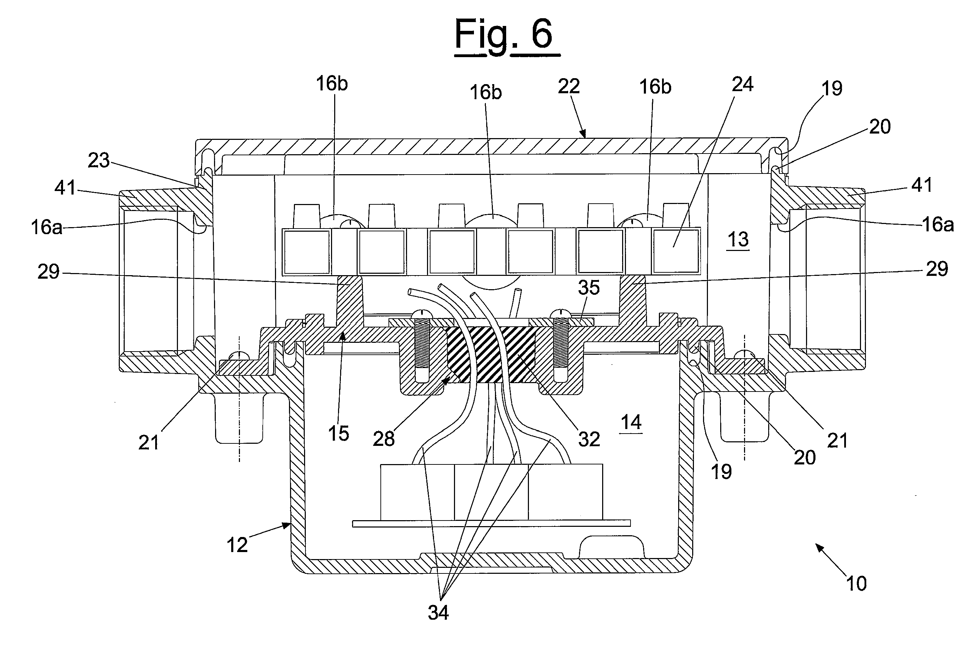

The box-shaped body 12 is equipped on the inside with a perimetric abutment plane 18 equipped with a throat 19 in which a silicon gasket (not shown) can be inserted. The inner cover 15, on the side facing towards the lower chamber 14, is shaped with a matching ribbing 20 to insert into the throat 19, as shown in the section of figure 6. Such matching engagement means make the seal when the inner cover 15 is clamped onto the box-shaped body 12 through threaded connection 21.

The box 10, which according to a preferred embodiment is made from high-quality plastic, is closed on top by a cover 22, also screwed on.

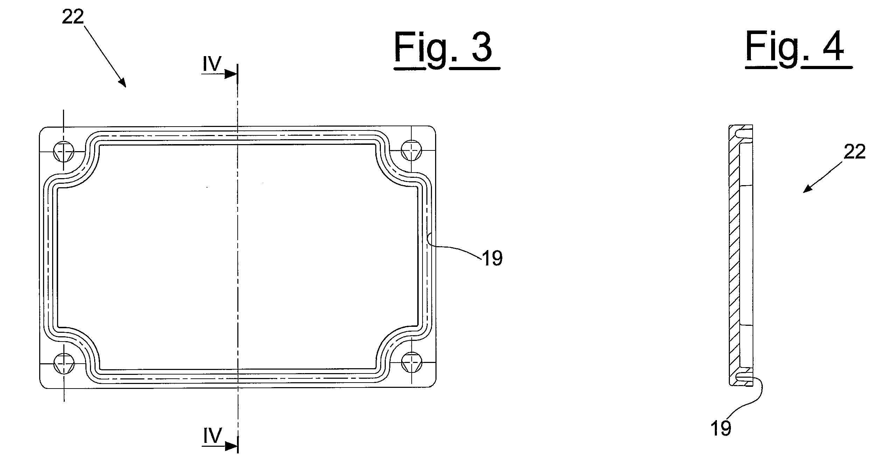

On the inner side, along the perimeter, the cover 22 shown in figures 3 and 4 has a throat 19, in which a silicon gasket (not shown) can be positioned, suitable for engaging with a matching ribbing 20 present on an upper side 23 of the box-shaped body 12. Such matching engagement means make the seal in collaboration with the gasket when the upper cover 22 is screwed onto the box-shaped body 12.

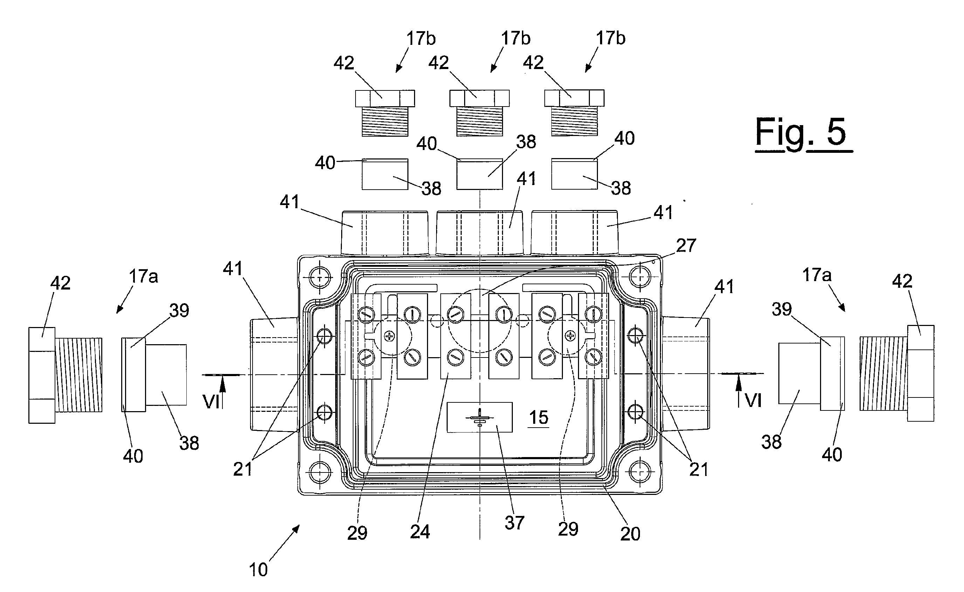

As shown in figures 5 and 6, the upper chamber 13 houses a terminal board 24 for the connection of the cables (not shown), whereas an electronic transformer 25, shown only schematically since it is of the known type, is housed in the lower chamber 14.

Moreover, a connecting terminal 37 for connection to earth can be arranged in the upper chamber 13.

The transformer 25, which represents the component sensitive to atmospheric agents and in particular to water, is thus separated from the outside by two covers, the inner cover 15 and the upper cover 23, in other words by two levels of protection.

The connection cables between transformer 25 and terminal board 24 must necessarily cross the inner cover 15, which has a hole 27 equipped with a flanged cable gland 28.

Moreover, the inner cover 15 comprises elements for the stable positioning 29 of the terminal board 24.

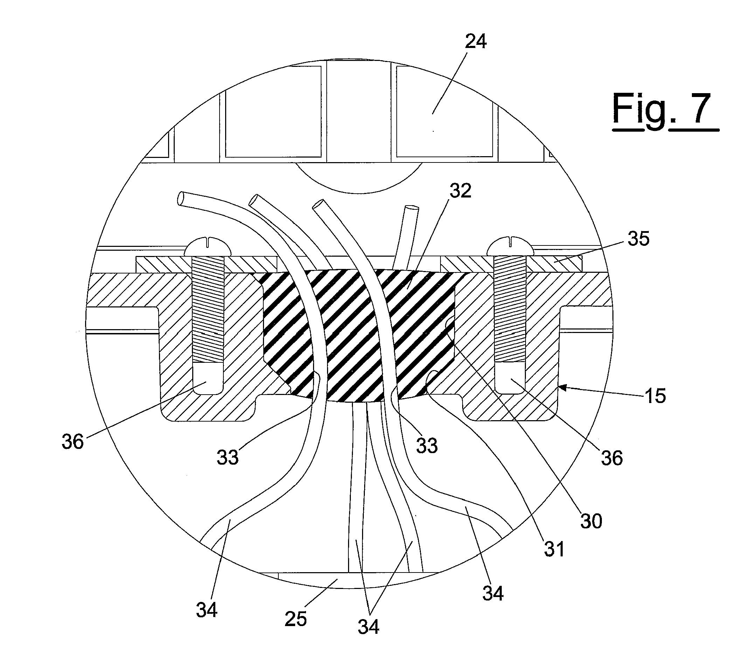

The flanged cable gland 28 comprises, as shown in the enlarged and sectioned detail of figure 7, a cylindrical seat 30 shaped with frusto-conical base 31 having decreasing section.

A rubber element 32, having a number of holes 33 equal to the number of cables 34 that cross the inner cover 15, is contained in the seat 30. The seat 30 is closed on top with a perforated flange 35 screwed into suitable seats 36 present on the cover 15. By clamping the flange 35 onto the inner cover 15, the rubber element 32 is axially compressed and, not being able to expand circumferentially towards the outside, since contained in the seat 30, clamps onto the cables 34 making the seal.

Figure 5, on the other hand, shows an exploded view of the cable glands for the outer wiring 17a and 17b, comprising a rubber tubular cylindrical element 38, possibly equipped with a widened head 39, and provided at one end with a metal ring 40, or metal abutment surface.

The rubber cylindrical element 38, through which the cables are passed, is housed in a threaded sleeve 41 of the box-shaped body 12 positioned at the through holes 16a and 16b.

In the threaded sleeve 41 of the box-shaped body 12 a threaded screw 42 is screwed, which is axially perforated that axially compresses the rubber element 38, which since it cannot expand radially to the outside deforms towards the inside clamping onto the cables.

The water-tight multiple junction box for an electronic transformer object of the present invention has the advantage of allowing the inspection of the transformer even when already installed to replace it in the case of electronic defects or to analyse such defects. The junction box itself can also be easily removed from the installation, if necessary.

Moreover, the installer can advantageously connect the cables of the appliance directly to the junction box object of the present invention.

A further advantage is given by the possibility of carrying out the through connection to earth with a connecting terminal inside the box.

Another advantage is given by the fact that the transformer, which reaches high temperatures, ensures that, inserted like in the invention and thus positioned in a water-tight space with water-tight cables, in the heating phase, the internal pressure increases without letting air escape.

At the moment of cooling, given that the air has not escaped, there shall not be depression inside the transformer space (or other electronic or electromechanical component).

Indirectly, the terminal board-holding space also reaps the benefits due to the fact that a water-tight partition has been inserted, i.e. reduced air volume which means less increase in pressure or depression in the case in which the connection cables do not converge in a water-tight element and thus allow the air and/or water to pass through the copper strands.

The water-tight multiple junction box for an electronic transformer, object of the present invention, allows an excellent level of protection from atmospheric agents and in particular from water to be obtained.

## Claims

1. Water-tight multiple junction box for an electronic transformer comprising a box-shaped body (12) for housing an electronic transformer (25), carrying a plurality of holes (16a, 16b) equipped with cable glands (17a, 17b) for the passage of cables to the outside of said box (10) towards the mains and the lighting apparatuses, as well as a water-tight upper cover (22), **characterised in that** said box-shaped body (12) comprises a lower chamber (14), suitable for housing said transformer, and an upper chamber (13), suitable for housing a wiring terminal board (24), in which said chambers (13, 14) are separated by a water-tight inner cover (15), which comprises at least one hole (27) equipped with an inner cable gland (28) for the electrical connection of said transformer (25).

2. Box according to claim 1, **characterised in that** said inner cover (15) is clamped in abutment on a perimetric plane (18) of said box-shaped body (12), said cover (15) and said perimetric abutment plane (18) comprising matching engagement means (19, 20).

3. Box according to claim 1, **characterised in that** said upper cover (22) is clamped in abutment on an upper edge (23) of said box-shaped body (12), said upper cover (22) and said edge (23) comprising matching engagement means (19, 20).

4. Box according to claims 2 or 3, **characterised in that** said matching engagement means respectively comprise a perimetric throat (19) and a matching ribbing (20), suitable for being inserted in said throat.

5. Box according to claim 1, **characterised in that** said inner cable gland (28) comprises a cylindrical seat (30) shaped with a frusto-conical base (31) with decreasing section, a rubber element (32) having a number of holes (33) equal to the number of cables (34) that cross the inner cover (15), a perforated flange (35) stably connected to said inner cover (15), suitable for closing said seat (30) on top and axially compressing said rubber element (32) causing it to be clamped onto said cables (34).

6. Box according to claim 1, **characterised in that** said cable glands (17a, 17b) for the passage of cables to the outside of said box (10) comprise a rubber tubular cylindrical element (38) housed in a threaded sleeve (41) of the box-shaped body (12) positioned at said holes (16a, 16b), and an axially perforated threaded screw (42), suitable for axially compressing said rubber cylindrical element (38) causing it to be clamped onto said cables.

7. Box according to claim 6, **characterised in that** said tubular cylindrical element (38) is provided at one end with a metal abutment surface (40).

8. Box according to claim 1, **characterised in that** said inner cover (15) comprises elements for the stable positioning (29) of said terminal board (24).

9. Box according to claim 1, **characterised in that** it comprises a terminal (37) for connection to earth.
